# EUROPÄISCHE PATENTSCHRIFT

(11) **EP 1 970 601 B1**
(45) Veröffentlichungstag und Bekanntmachung des Hinweises auf die Patenterteilung: **23.07.2014**
(21) Anmeldenummer: 08152278.1
(22) Anmeldetag: 05.03.2008
(51) Int. Cl.: F16H 61/688, F16H 61/20, F16H 61/28, F16D 48/02

(54) **Verfahren zum Steuern eines automatisierten Stufenschaltgetriebes**
Method for controlling an automated variable speed transmission
Procédé destiné à la commande d'une boîte de vitesse automatique

(30) Priorität: 14.03.2007 DE 102007012194
(43) Veröffentlichungstag der Anmeldung: 17.09.2008
(73) Patentinhaber: ZF Friedrichshafen AG, 88038 Friedrichshafen (DE)
(72) Erfinder: Martin, Hans-Joachim, 88079 Kressbronn (DE); Fritzer, Anton, 88677 Markdorf (DE)

(56) Entgegenhaltungen:
- EP-A2- 1 267 102
- EP-A2- 1 788 286
- DE-A1- 3 032 850

## Beschreibung

Die Erfindung betrifft ein Verfahren zum Steuern eines automatisierten Stufenschaltgetriebes gemäß dem Oberbegriff des Patentanspruchs 1.

Automatisierte Stufenschaltgetriebe mit druckbeaufschlagbaren Kupplungsstellzylindern sind sowohl in der Bauart eines einfachen automatisierten Schaltgetriebes mit einer einzigen Trennkupplung als auch in der Bauart eines automatisierten Doppelkupplungsgetriebes mit zwei jeweils einem von zwei Teilgetrieben zugeordneten Trennkupplungen in unterschiedlichen Ausführungsformen bekannt. Die Steuerungseinrichtung eines automatisierten Schaltgetriebes umfasst Stellantriebe, wie Gangsteller zum Ein- und Auslegen der Gänge und Kupplungsstellzylinder zum Schließen bzw. Öffnen der Trennkupplung oder der Trennkupplungen, sowie Steuerungselemente zur Steuerung der Stellantriebe.

Aufgrund einer hohen Energiedichte, guter Steuerungseigenschaften und der Verfügbarkeit technisch ausgereifter Komponenten sind die Steuerungseinrichtungen automatisierter Schaltgetriebe zumeist hydraulisch ausgebildet, was bedeutet, dass die betreffenden Gangsteller und Kupplungsstellzylinder als hydraulische Stellzylinder und die zugeordneten Steuerungselemente als hydraulische Schalt- oder Regelventile ausgebildet sind. Die Schalt- und Regelventile sind bevorzugt druckfluidgesteuert ausgebildet und in dieser Bauart durch zumeist als kleinere Magnetventile oder dergleichen ausgebildete Vorsteuerventile ansteuerbar.

Das Verfahren gemäß der vorliegenden Erfindung werden anhand einer derartigen bevorzugten Ausgestaltung erläutert. Es ist in Kenntnis der Erfindung jedoch klar, dass beispielsweise die hydraulischen Komponenten auch durch pneumatische Komponenten ersetzt werden können, und dass die Schalt- und Regelventile auch elektrisch, elektromagnetisch oder auf andere Art und Weise angesteuert werden können.

Aus der gattungsgemäßen DE 101 34 115 A1 ist bereits eine Steuerungseinrichtung für ein automatisiertes Doppelkupplungsgetriebe bekannt, die für jedes der beiden Teilgetriebe einen unabhängigen Steuerungskreis mit Gangregelventilen zur Ansteuerung von mehreren Gangstellern mit Kupplungsregelventilen zur Ansteuerung der beiden Trennkupplungen und mit einem Multiplexventil zur koordinierten Ansteuerung der Gangregelventile aufweist. Durch die erforderliche Verdoppelung der Steuerungselemente ergibt sich insgesamt ein erheblicher konstruktiver und baulicher Aufwand.

Die Offenbarung der EP 1 788 286 A2 ist relevant für Artikel 54(3) EPÜ.

Moderne automatisierte Stufenschaltgetriebe und die diesen zugeordneten Getriebesteuerungseinrichtungen haben vielfach die Fähigkeit, aus der unmittelbar zurückliegenden Fahrhistorie, dem aktuellen Fahrzustand, dem Fahrerverhalten oder dergleichen auf die als nächstes zu erwartende Fahrsituation zu schließen und entsprechende Getriebeschaltvorgänge vorzunehmen. So wird beispielsweise bei einem eine bestimmte Zeitspanne überschreitenden Stopp unabhängig von der jeweiligen Stellung des Getriebewählhebels die aktive Kupplung geöffnet und das Schaltgetriebe in eine N-Position (Neutral-Stellung) geschaltet.

Um für eine erneute Fahrtaufnahme die Schaltgeschwindigkeit des Schaltgetriebes von der N-Position in die D-Position für eine Vorwärtsfahrt bzw. in die R-Position für eine Rückwärtsfahrt zu reduzieren und den Einschaltstoß zu eliminieren, soll in der N-Position bereits der erste Gang (bzw. ein anderer Anfahrgang) oder der Rückwärtsgang bzw. bei einem Doppelkupplungsgetriebe sowohl der erste Gang (bzw. ein anderer Anfahrgang) als auch der Rückwärtsgang vorbereitend eingelegt werden. Um bei einem Systemfehler zu vermeiden, dass das Fahrzeug in einen nicht erlaubten Fahrzustand gelangt, muss dabei sichergestellt werden, dass die Trennkupplung bzw. die Trennkupplungen, falls diese schon offen sind, sicher geöffnet bleiben oder aber in die geöffnete Stellung geschaltet und in dieser gehalten werden.

Vor diesem Hintergrund liegt der Erfindung die Aufgabe zugrunde, ein Verfahren zum Steuern eines automatisierten Stufenschaltgetriebes zu schaffen, bei dessen Nutzung sichergestellt ist, dass bei einer derartigen vorbereitenden Einlegung eines Vorwärtsganges und/oder Rückwärtsganges in der Neutral-Stellung des Getriebes die Fluidversorgung der Kupplungsstellzylinder sicher unterbrochen wird. Dabei soll der konstruktive und bauliche Aufwand, beispielsweise auch bei einem Doppelkupplungsgetriebe, möglichst gering gehalten werden.

Die Lösung dieser Aufgabe ergibt sich aus den Merkmalen des Anspruchs 1

Der Erfindung liegt die Erkenntnis zugrunde, dass eine vollständige Unterbrechung jeglicher Fluidversorgung für die Kupplungsstellzylinder den sichersten Weg darstellt, um ein unbeabsichtigtes Schließen der Kupplung bzw. der Kupplungen unabhängig von der jeweiligen Ventilkonstellation der Steuerungseinrichtung zu vermeiden.

Demnach geht die Erfindung zunächst aus von einem Verfahren zum Steuern eines automatisierten Stufenschaltgetriebes mit wenigstens einem fluidbeaufschlagbaren Kupplungsstellzylinder, dessen Fluidversorgung mittels eines jeweils zugeordneten Kupplungsregelventils über eine Getriebesteuerungseinrichtung gesteuert wird.

Zur Lösung der gestellten Aufgabe ist dabei erfindungsgemäß vorgesehen, dass bei eingestellter Neutral-Stellung des Stufenschaltgetriebes die Fluidversorgungsleitung der Kupplungsstellzylinder automatisch gesperrt wird. Auf diese Weise kann auch im Falle des Auftretens eines Systemfehlers, der gemäß dem Stand der Technik unter anderem zum Schließen einer Kupplung führen würde, an der Trennkupplung bzw. den Trennkupplungen kein Druck aufgebaut werden.

Die Erfindung geht bezüglich einer zur Durchführung des erfindungsgemäßen Verfahrens geeigneten Vorrichtung aus von einer Steuerungseinrichtung für ein automatisiertes Stufenschaltgetriebe mit wenigstens einem fluidbeaufschlagbaren Kupplungsstellzylinder, dessen Fluidversorgung mittels eines jeweils zugeordneten Kupplungsregelventils über eine Getriebesteuerungseinrichtung gesteuert wird.

Bei der zur Durchführung des erfindungsgemäßen Verfahrens geeigneten Vorrichtung ist dabei vorgesehen, dass in der Fluidversorgungsleitung der Kupplungsstellzylinder ein Sperrventil angeordnet ist, welches bei eingestellter Neutral-Stellung des Schaltgetriebes die Fluidversorgungsleitung automatisch sperrt, so dass sich unabhängig von der aktuellen Konstellation der Getriebesteuerungseinrichtung kein Druck in den Kupplungsstellzylindern aufbauen kann und ein Schließen der Kupplung bzw. der Kupplungen sicher ausgeschlossen ist.

Gemäß einer Ausgestaltung dieser Steuerungseinrichtung ist vorgesehen, dass das Sperrventil als aktiv schließendes Ventil ausgebildet ist. Daher wird bei einer Neutral-Stellung des Schaltgetriebes das Sperrventil aktiv angesteuert und in seine Schließstellung geschaltet. Auch bei einem Einfach-Fehler, bei dem die zum Schalten des Sperrventils erforderliche Energie noch vorliegt, wird die Druckfluidzuführung zu der Trennkupplung bzw. den Trennkupplungen unterbrochen, so dass sich in einem solchen Fehlerfall an den Trennkupplungen kein Druck aufbauen kann.

Bei einer anderen zur Durchführung des erfindungsgemäßen Verfahrens geeigneten Vorrichtung ist vorgesehen, dass das Sperrventil als aktiv öffnendes Ventil ausgebildet ist. Eine derartige Ausgestaltung hat den Vorteil, dass beispielsweise bei einem Haupt-Fehler, bei dem auch die elektrische Energieversorgung zum Schalten des Sperrventils ausfällt, dieses in seine Schließstellung schaltet, so dass die Druckfluidzufuhr zu den Kupplungsstellzylindern unterbrochen wird und diese geöffnet werden bzw. offen gehalten werden, so dass das Fahrzeug trotz eines eingelegten Ganges nicht in einen unerlaubten Fahrzustand gelangt.

In einer bevorzugten konstruktiven Ausgestaltung der Steuerungseinrichtung ist vorgesehen, dass das Sperrventil als druckfluidbetätigter Hydraulikschieber ausgebildet ist. Derartige Hydraulikschieber stellen äußerst zuverlässige, marktübliche Komponenten dar und sind in vielfachen Auslegungsgrößen erhältlich.

In einer weiterer Ausgestaltung ist vorgesehen, dass das Sperrventil als einseitig beaufschlagtes, gegen die Kraft einer Rückstellfeder verstellbares Längsschieberventil ausgebildet ist. Ein derartiges Ventil benötigt zur Ansteuerung nur eine Steuerdruckleitung, über die das zum Verstellen des Ventils erforderliche Druckfluid zugeführt wird. Eine Verstellung in der Gegenrichtung erfolgt bei einer Druckentlastung der Druckfluidleitung mittels der Rückstellfeder.

Die Ansteuerung des Sperrventils erfolgt gemäß einer Ausgestaltung der Vorrichtung über ein einfaches Magnetventil, welches zwischen einer Öffnungsstellung und einer Schließstellung verstellbar ist.

Gemäß einer anderen Ausgestaltung der Vorrichtung ist vorgesehen, dass das Sperrventil über ein Druckregelventil angesteuert wird. Diese Variante bietet die Möglichkeit, an das Druckregelventil weitere Aktuatoren und/oder Ventile für zu regelnde Komponenten, beispielsweise eine so genannte TOD-Kupplung (TOD = torque on demand = wahlweise betätigbarer Nebenabtrieb), einen Kühl- und Schmierkreislauf und dergleichen anzuschließen, wie anhand von Ausführungsbeispielen noch dargelegt wird. Zu diesem Zweck weist das Druckregelventil beispielsweise einen ersten, unteren Druckbereich zum Ansteuern des Sperrventils und einen daran anschließenden zweiten Druckbereich größeren Druckes zum Ansteuern einer weiteren Komponente auf.

Um auch bei einem Doppelkupplungsgetriebe mit zwei Kupplungsstellzylindern und zugeordneten Kupplungsregelventilen sowie mit einer diesen gemeinsamen, vor den Kupplungsregelventilen verzweigten Fluidversorgungsleitung nur ein einziges Sperrventil zu benötigen und damit den Bauaufwand niedrig zu halten, ist gemäß einer weiteren Ausgestaltung der Vorrichtung vorgesehen, dass das Sperrventil in diesem Fall vor dem Verzweigungspunkt der Fluidversorgungsleitung angeordnet ist.

Die Erfindung lässt sich anhand mehrerer Ausführungsbeispiele weiter erläutern. Dazu ist der Beschreibung eine Zeichnung beigefügt.
In dieser zeigt
- Fig. 1: schematisch eine hydraulische Steuerungseinrichtung für ein Doppelkupplungsgetriebe mit einem über ein Magnetventil angesteuerten Sperrventil,
- Fig. 2: schematisch eine hydraulische Steuerungseinrichtung für ein Doppelkupplungsgetriebe mit einem Sperrventil und einer weiteren Komponente, die über ein gemeinsames Druckregelventil angesteuert werden und
- Fig. 3: schematisch eine hydraulische Steuerungseinrichtung etwa gemäß der Fig. 2.

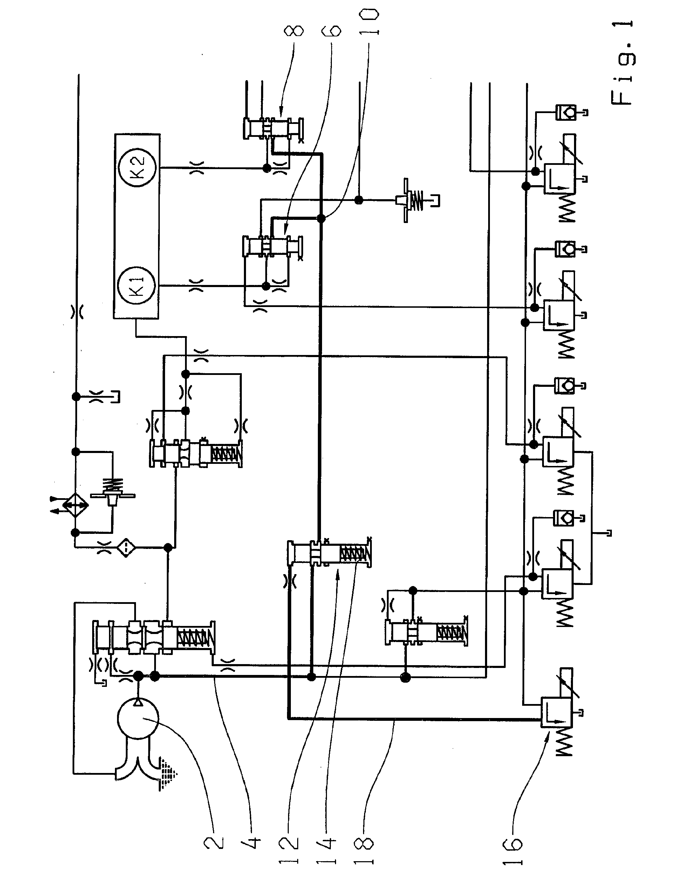

Das in Fig. 1 dargestellte Schaltungsschema einer Steuerungseinrichtung für ein automatisiertes Doppelkupplungs-Stufenschaltgetriebe umfasst neben anderen, für die vorliegende Erfindung nicht relevanten Komponenten, eine Druckfluidpumpe 2, die über eine Fluidversorgungsleitung 4 die Aktuatoren von zwei Trennkupplungen K1 bzw. K2 versorgt. Die beiden Trennkupplungen K1, K2 werden in an sich bekannter und deshalb nicht näher dargestellter Weise mittels zweier Kupplungsstellzylinder zwischen einer Öffnungsstellung und einer Schließstellung bewegt.

Der Trennkupplung K1 ist ein Kupplungsregelventil 6 steuerungstechnisch vorgeschaltet, welches den Fluidstrom zum Kupplungsstellzylinder der Trennkupplung K1 steuert. Der Trennkupplung K2 ist ein mit dem Kupplungsregelventil 6 identisches Kupplungsregelventil 8 zugeordnet, welches den Fluidstrom zu Kupplungsstellzylinder der Trennkupplung K2 steuert. Beide Kupplungsregelventile 6, 8 werden über die Fluidversorgungsleitung 4 versorgt, die sich in einem Verzweigungspunkt 10 vor den Kupplungsregelventilen 6, 8 verzweigt.

In der Fluidversorgungsleitung 4 ist vor dem Verzweigungspunkt 10 ein Sperrventil 12 angeordnet, welches zwischen der dargestellten Öffnungsstellung und einer Schließstellung verstellbar ist, bei der die Fluidversorgungsleitung 4 abgesperrt ist. Das Sperrventil 12 ist als druckfluidbetätigter Hydraulikschieber, genauer gesagt als einseitig beaufschlagtes, gegen die Kraft einer Rückstellfeder 14 in seine Schließstellung verstellbares Längsschieberventil ausgebildet, womit es also als ein aktiv schließendes Ventil ausgebildet ist. Die Ansteuerung des Sperrventils 12 erfolgt mittels eines einfachen, zwischen einer Öffnungsstellung und einer Schließstellung verstellbaren Magnetventils 16 über eine Steuerfluidleitung 18.

Wenn das Schaltgetriebe in Neutral (N-Position) geschaltet ist, wird das Magnetventil 16, von einem Getriebesteuerungsgerät gesteuert, automatisch bestromt, wodurch das Sperrventil 12 gegen die Kraft der Rückstellfeder 14 in seine Schließstellung verstellt und die Fluidversorgungsleitung 4 gesperrt wird. Dadurch wird bei Auftreten eines Einfach-Fehlers, bei welchem die Funktion des Magnetventils 16 jedoch erhalten bleibt, ein Druckaufbau in den Kupplungsstellzylindern der Trennkupplungen K1, K2 sicher verhindert.

Bei einem Haupt-Fehler, bei welchem beispielsweise auch die Stromversorgung des Magnetventils 16 ausfällt, wird das Sperrventil 12 mittels der Rückstellfeder 14 in seine Öffnungsstellung verstellt, welches weiter ohne Bedeutung ist, da dann ja auch die Druckfluidversorgung der Trennkupplungen K1, K2 über die Fluidversorgungsleitung 4 ausfällt, so dass auch in diesem Fall ein Druckaufbau in den Kupplungsstellzylindern der Trennkupplungen K1, K2 sicher unterbunden wird.

Das Sperrventil 12 kann auch als aktiv öffnendes Ventil ausgebildet sein, welches bedeutet, dass beim Auftreten eines Haupt-Fehlers, bei welchem auch die Stromversorgung des Magnetventils 16 ausfällt, das Sperrventil 12 schließt und schon dadurch unabhängig von der Konstellation der Steuerungseinrichtung die Druckfluidversorgung der Trennkupplungen K1, K2 unterbrochen wird.

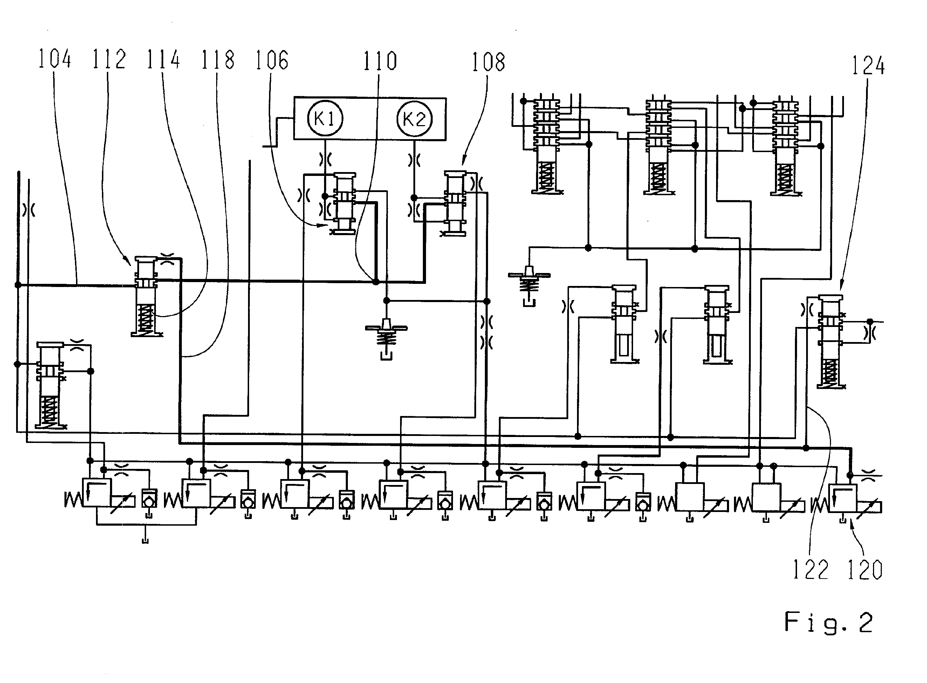

Fig. 2 zeigt einen Ausschnitt einer Steuerungseinrichtung für ein Doppelkupplungsgetriebe, bei welchem die nicht dargestellten Kupplungsstellzylinder der beiden Trennkupplungen K1, K2 über eine gemeinsame Fluidversorgungsleitung 104 sowie die den beiden Trennkupplungen zugeordneten Kupplungsregelventile 106, 108 mit Druckfluid versorgt werden. Die Fluidversorgungsleitung 104 verzweigt sich in einem Verzweigungspunkt 110 zu den beiden Kupplungsregelventilen 106, 108.

In der Fluidversorgungsleitung 104 ist ein Sperrventil 112 angeordnet, welches in diesem Fall als aktiv öffnendes Ventil ausgebildet ist. Das Sperrventil 112 ist über eine Steuerfluidleitung 118 mit einem Druckregelventil 120 verbunden. Wenn das Druckregelventil 120 bestromt wird, wird das Sperrventil 112 gegen die Kraft einer Rückstellfeder 114 in eine Öffnungsstellung verstellt, bei der die Kupplungsregelventile 106, 108 mit Druckfluid versorgt werden. Wenn sich das Schaltgetriebe in seiner Neutral-Stellung befindet wird die Bestromung des Druckregelventils 120 unterbrochen, so dass das Sperrventil 112 durch die Rückstellfeder 114 in seine Schließposition verstellt und die Druckfluidzufuhr zu den Kupplungsregelventilen 106, 108 unterbrochen wird.

Von der Steuerfluidleitung 118 zweigt zudem eine zweite Steuerfluidleitung 122 ab, über die ein Kupplungsregelventil 124 zur Steuerung einer so genannten TOD-Kupplung (TOD = torque on demand = wahlweise betätigbarer Nebenabtrieb) angesteuert wird.

Das Druckregelventil 120 kann beispielsweise einen Druck von 0 bar bis etwa 5 bar einstellen. Zur Verstellung des Sperrventils 112 genügt ein unterer Druckbereich bis etwa 2 bar. Der Druckbereich von 2 bar bis 5 bar ist für die TOD-Kupplungsansteuerung vorgesehen, also zum Betätigen einer Kupplung, mit der ein Nebenabtriebsaggregat zu- oder abschaltbar ist.

Wenn sich das Schaltgetriebe in seiner Neutral-Stellung befindet, wird der Ausgangsdruck des Druckregelventils 120 auf 0 bar reduziert, wobei zuerst die TOD-Kupplung geöffnet und sodann das Sperrventil 112 geschlossen wird, womit die Druckfluidzufuhr zu den Stellzylindern der Trennkupplungen K1, K2 unterbrochen und diese in ihre Öffnungsstellung verstellt werden.

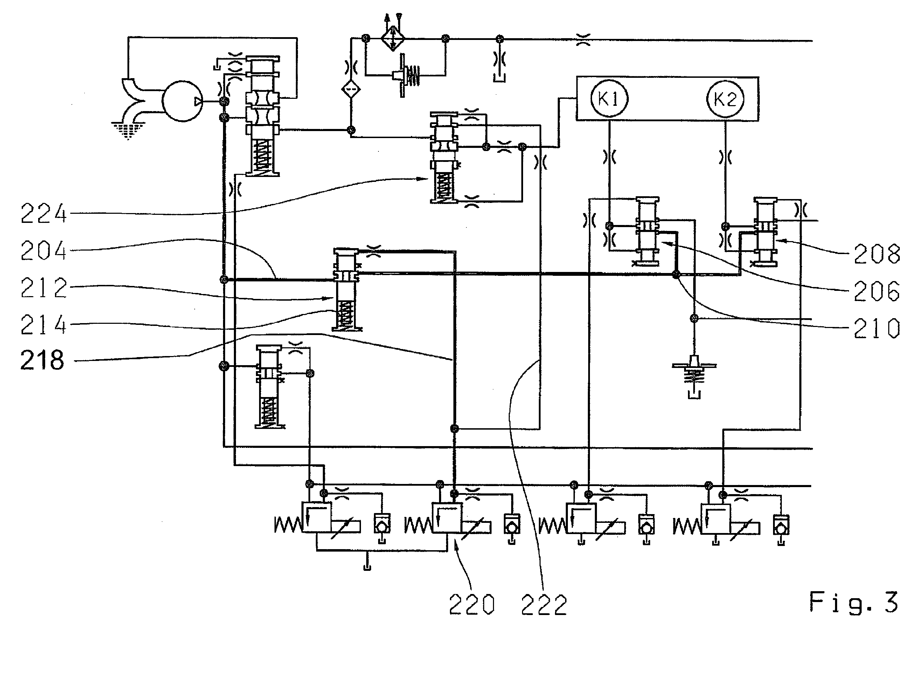

Fig. 3 zeigt eine Anordnung ähnlich der Fig. 2. Die den nicht dargestellten Kupplungsstellzylindern zweier Trennkupplungen K1, K2 zugeordneten Kupplungsregelventile 206, 208 werden über eine Fluidversorgungsleitung 204 mit Druckfluid versorgt. Die Fluidversorgungsleitung 204 verzweigt sich in einem Verzweigungspunkt 210 zu den beiden Kupplungsregelventilen 206, 208.

In der Fluidversorgungsleitung 204 ist ein Sperrventil 212 angeordnet, welches wiederum als aktiv öffnendes Ventil ausgebildet ist. Das Sperrventil 212 ist über eine Steuerfluidleitung 218 mit einem Druckregelventil 220 verbunden, welches beispielsweise an seinem Ausgang wiederum einen Druckbereich von 0 bar bis etwa 5 bar zur Verfügung stellen kann.

Von der Steuerfluidleitung 218 zweigt vor dem Sperrventil 212 eine weitere Steuerfluidleitung 222 ab, über die ein Regelventil 224 zur Ansteuerung eines Kühl- und Schmierkreislaufes versorgt wird.

Wenn das Druckregelventil 220 bestromt wird, dann wird das Sperrventil 212 gegen die Kraft der Rückstellfeder 214 in eine Öffnungsstellung verstellt, so dass die Kupplungsregelventile 206, 208 mit Druckfluid versorgt werden. Wenn sich das Schaltgetriebe in seiner Neutral-Stellung befindet, wird die Bestromung des Druckregelventils 220 unterbrochen, so dass der Ausgangsdruck des Druckregelventils 220 auf 0 bar reduziert wird. Dadurch wird das Sperrventil 212 unter der Wirkung der Rückstellfeder 214 geschlossen und die Druckfluidversorgung für die Stellzylinder der Trennkupplungen K1, K2 unterbrochen. Zuvor ist bei einem Absinken des Ausgangsdruckes des Druckregelventils 220 unter einen vorgegebenen Wert auch die Versorgung des Kühl- und Schmierkreislaufes über ein Schließen des Regelventils 224 unterbrochen worden.

Auch bei diesem Ausführungsbeispiel wird der untere Druckbereich des Druckregelventils 220 bis etwa 2 bar für die Ansteuerung des Sperrventils 212 verwendet, während der sich daran anschließende obere Druckbereich von 2 bar bis 5 bar der Ansteuerung des Regelventils 224 dient.

Mit der zur Durchführung des erfindungsgemäßen Verfahrens geeigneten Anordnung eines Sperrventils in der Fluidversorgungsleitung der Kupplungsstellzylinder kann in der Neutral-Stellung des Schaltgetriebes bei einem Einfachkupplungsgetriebe der erste Gang bzw. ein anderer Anfahrgang oder der Rückwärtsgang und bei einem Doppelkupplungsgetriebe in dem ersten Teilgetriebe beispielsweise der erste Gang oder ein anderer Anfahrgang und in dem anderen Teilgetriebe der Rückwärtsgang vorbereitend eingelegt werden. Auf diese Weise können kürzere Schaltzeiten erreicht werden, und der Einschaltstoß beim Gangeiniegen aus der N-Position in die D-Position bzw. in die R-Position kann auf diese Weise vermieden oder doch zumindest stark reduziert werden. Bei einem Einfachfehler (z.B. elektrischer Kurzschluss nach Masse; Klemmen des Kupplungsventils) kann in der Neutral-Stellung des Schaltgetriebes kein unerlaubter Fahrzustand durch das Schließen einer Kupplung entstehen.

### Bezugszeichen

- 2: Druckfluidpumpe
- 4: Fluidversorgungsleitung
- 6: Kupplungsregelventil
- 8: Kupplungsregelventil
- 10: Verzweigungspunkt
- 12: Sperrventil
- 14: Rückstellfeder
- 16: Magnetventil
- 18: Steuerfluidleitung
- 104: Fluidversorgungsleitung
- 106: Kupplungsregelventil
- 108: Kupplungsregelventil
- 110: Verzweigungspunkt
- 112: Sperrventil
- 114: Rückstellfeder
- 118: Steuerftuidleitung
- 120: Druckregelventil
- 122: Steuerfluidleitung
- 124: Kupplungsregelventil
- 204: Fluidversorgungsleitung
- 206: Kupplungsregelventil
- 208: Kupplungsregelventil
- 210: Verzweigungspunkt
- 212: Sperrventil
- 214: Rückstellfeder
- 218: Steuerfluidleitung
- 220: Druckregelventil
- 222: Steuerfluidleitung
- 224: Regelventil
- K1: Trennkupplung
- K2: Trennkupplung

## Patentansprüche

1. Steuerungsverfahren eines automatisierten Stufenschaltgetriebes mit wenigstens einem fluidbeaufschlagbaren Kupplungsstellzylinder, dessen Fluidversorgung mittels eines jeweils zugeordneten Kupplungsregelventils (6, 8, 106, 108, 206, 208) über eine Getriebesteuerungseinrichtung gesteuert wird, **dadurch gekennzeichnet, dass** bei eingestellter Neutral-Stellung des Schaltgetriebes der erste Gang oder der Rückwärtsgang vorbereitend eingelegt wird und dabei eine Fluidversorgungsleitung (4, 104, 204) des Kupplungsstellzylinders automatisch gesperrt wird.

## Claims

1. Method for controlling an automated variable speed transmission, with at least one fluid-loadable clutch-actuating cylinder, the fluid supply of which is controlled by means of a respectively assigned clutch-regulating valve (6, 8, 106, 108, 206, 208) via a transmission control device, **characterized in that**, when the neutral position of the variable speed transmission is set, the first gear or the reverse gear is selected as a preliminary and at the same time a fluid supply line (4, 104, 204) of the clutch-actuating cylinder is automatically shut off.

## Revendications

1. Procédé de commande d'une boîte de vitesses automatique, comprenant au moins un cylindre de réglage d'accouplement pouvant être sollicité par un fluide, dont l'alimentation en fluide est commandée au moyen d'une soupape de régulation d'accouplement (6, 8, 106, 108, 206, 208) à chaque fois associée, par le biais d'un dispositif de commande de boîte de vitesses, **caractérisé en ce que** lorsque la position neutre de la boîte de vitesses est enclenchée, la première vitesse ou la vitesse de marche arrière est enclenchée de manière préliminaire, et en une conduite d'alimentation en fluide (4, 104, 204) du cylindre l'occurrence de réglage d'accouplement est automatiquement bloquée.
